# EUROPEAN PATENT APPLICATION

(11) **EP 2 289 789 A1**
(43) Date of publication of application: **02.03.2011**
(21) Application number: 09010867.1
(22) Date of filing: 25.08.2009
(51) Int. Cl.: B62K 21/12, B62K 21/26, B62K 21/18

(54) **Detachable bicycle handlebar assembly**

(71) Applicant: LIFE STYLE METAL CO., LTD., Changhua (TW)
(72) Inventor: Lin, Hung-Chin, Changhua (TW)
(74) Representative: Becker Kurig Straus

(57) **Abstract**

A detachable bicycle handlebar assembly (10) includes a handlebar (20), two sleeves (30) respectively sleeved onto the two distal ends (26) of the handlebar (20), each having a longitudinal crevice (36) at the inner end (32), two clamping rings (40) respectively clamped on the inner ends (32) of the sleeves (30) and fastened tight with a respective screw rod (46) to affix the sleeves (30) to the handlebar (20), and two grips (50) respectively mounted on the outer ends (34) of the sleeves (30). This design allows removal of the sleeves (30) with the grips (50), two shifters (16) and two brake levers (14) from the handlebar (20), facilitating mounting and dismounting of the detachable bicycle handlebar assembly (10), replacement of a different shape of handlebar (20) and delivery of the bicycle.

## Description

### BACKGROUND OF THE INVENTION

### 1. Field of the Invention

The present invention relates to bicycle technology and more particularly, to a detachable bicycle handlebar assembly, which facilitates dismounting or replacement of the handlebar.

### 2. Description of the Related Art

A bicycle handlebar assembly of a regular bicycle comprises a handlebar and two grips. The handlebar is fastened to a stem at the top side of a bicycle front fork for the mounting of brake levers and shifters. The grips are respectively mounted on the two distal ends of the handlebar for gripping by the user.

Further, different bicycles use different shapes of handlebars to show different visual styles. However, conventional bicycle designs do not allow a user to detach the brake levers and shifters from the handlebar conveniently. Therefore, a bicycle rider cannot replace the handlebar of his(her) bicycle with a different shape design of handlebar by himself(herself) to show a different visual style. Further, the non-detachable design of the handlebar assembly complicates delivery of the bicycle.

### SUMMARY OF THE INVENTION

The present invention has been accomplished under the circumstances in view. It is the main object of the present invention to provide a detachable bicycle handlebar assembly, which facilitates mounting the handlebar with the brake levers and the shifters and dismounting of the brake levers and the shifters from the handlebar, allowing the user to replace the handlebar conveniently.

It is another object of the present invention to provide a detachable bicycle handlebar assembly, which allows quick mounting the handlebar with the brake levers and the shifters and dismounting of the brake levers and the shifters from the handlebar, facilitating bicycle delivery.

To achieve these and other objects of the present invention, a detachable bicycle handlebar assembly comprises a handlebar, two sleeves, two clamping rings and two grips. The sleeves are respectively sleeved onto the two distal ends of the handlebar, each having an inner end, an outer end opposite to the inner end and a longitudinal crevice longitudinally cut through the peripheral wall of the inner end. The clamping rings are respectively mounted on the inner ends of the sleeves. The two grips are respectively mounted around the sleeves and disposed at an outer side relative to the clamping rings. The handle bar comprises a base having a toothed outside wall, two end pieces, and two tapered connection portions that are respectively connected between the two opposite ends of the base and the two end pieces and have a diameter gradually reducing in direction away from the base toward the end pieces. The clamping rings are C-shaped clamping members, each having two free ends fastened together by a screw rod. Further, each sleeve has a protruding block inserted into the gap between the two free ends of the associating clamping ring and secured thereto by the screw rod that fastens the two free ends of the associating clamping ring.

### BRIEF DESCRIPTION OF THE DRAWINGS

FIG. 1 is a top view of a detachable bicycle handlebar assembly in accordance with the present invention.
FIG. 2 is an exploded view of the detachable bicycle handlebar assembly in accordance with the present invention.
FIG. 3 illustrates the sleeves detached with the respective clamping rings, grips, brake levers and shifters from the handlebar according to the present invention.
FIG 4 is a schematic drawing showing the detached sleeves with the respective clamping rings, grips, brake levers and shifters fastened to the down tube of the bicycle for delivery according to the present invention.

### DETAILED DESCRIPTION OF THE INVENTION

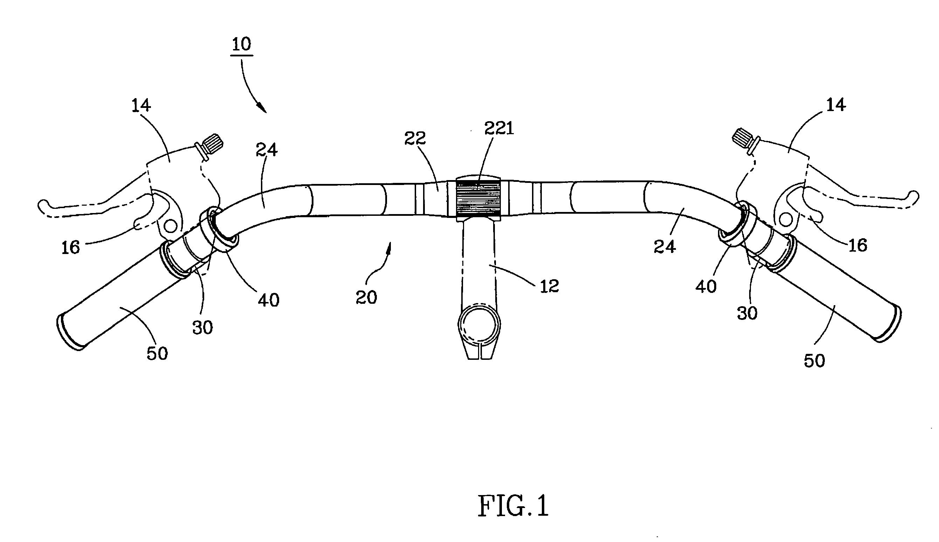

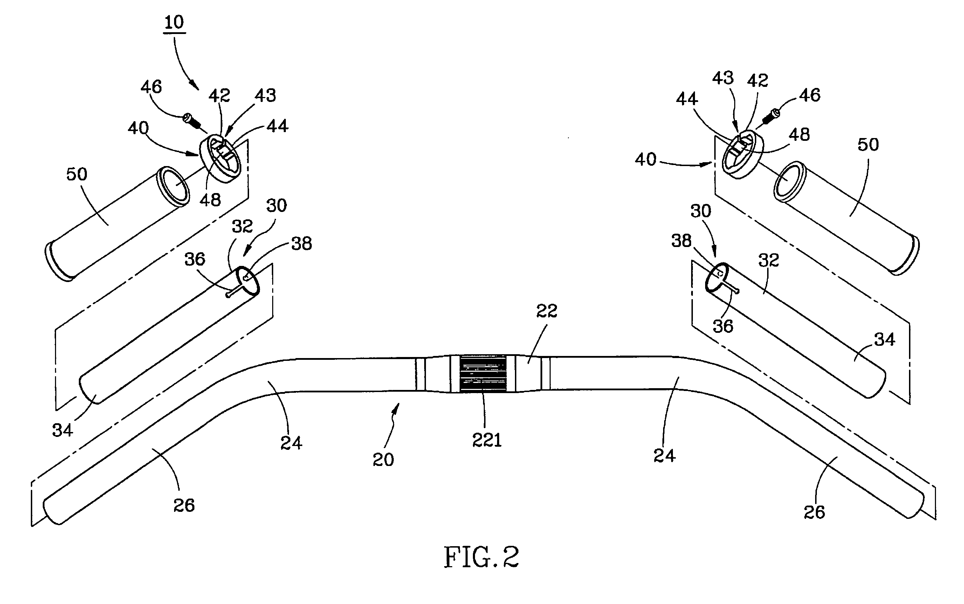

Referring to FIGS. 1 and 2, a detachable bicycle handlebar assembly **10** in accordance with the present invention is shown connected to the top end of a bicycle front fork (not shown) by means of a stem **12** to support two brake levers **14** and two shifters **16.**

The detachable bicycle handlebar assembly **10** comprises:
a handlebar **20,** which comprises a base **22** that is connected to the stem **12** and has a toothed surface **221** for engagement with the inside wall of the stem **12** positively, two end pieces **26,** and two tapered connection portions **24** that are respectively connected between the two opposite ends of the base **22** and the two end pieces **26** and have a diameter gradually reducing in direction away from the base **22** toward the end pieces **26;**
two sleeves **30** respectively sleeved onto the two end pieces **26** of the handlebar **20,** each sleeve **30** having an inner end **32,** an outer end **34** opposite to the inner end **32,** a longitudinal crevice **36** longitudinally cut through the peripheral wall of the inner end **32** for enabling the inner end **32** to be compressed radially to reduce the inner diameter, and a protruding block **38** protruded from the outside wall of the inner end **32;**
two clamping rings **40** that are C-shaped clamping members respectively attached to the periphery of the inner ends **32** of the two sleeves **30,** each clamping ring **40** having two free ends **42** and **44** fastened together by a screw rod **46** to fixedly secure the inner end **32** of the respective sleeve **30** and the clamping ring **40** to the respective end piece **26** of the handlebar **20,** a gap **43** between two free ends **42** and **44** provided for the protruding block **38** of the sleeve **30** to insert thereinto to avoid the clamping rings **40** sliding on the sleeve **30,** the clamping rings **40** having a plurality of protruding blocks **48** on the inside wall of the clamping rings **40;** and
two grips **50** respectively and tightly press-fitted onto the two sleeves **30** around the outer ends **34** of the sleeves **30.**

Further, quick-release devices may be used to substitute for the clamping rings **40.**

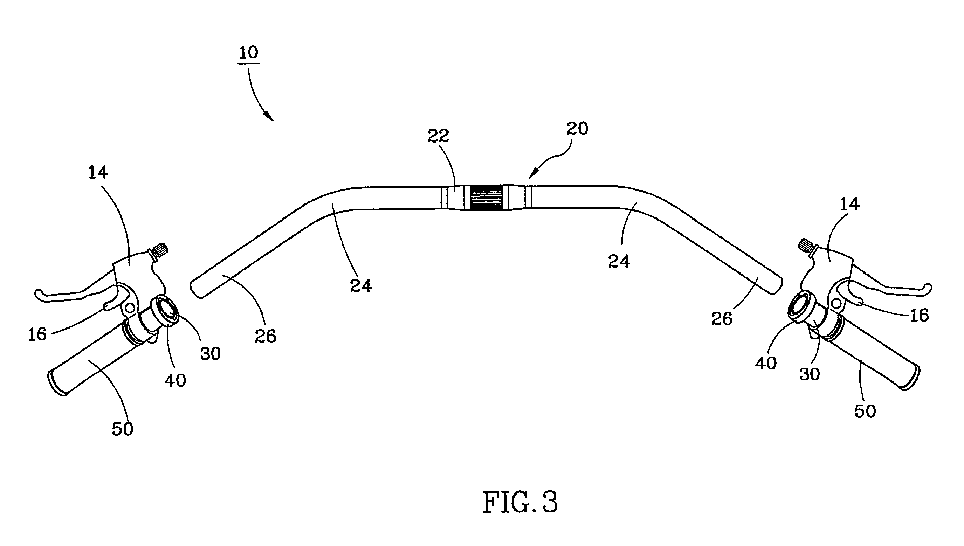

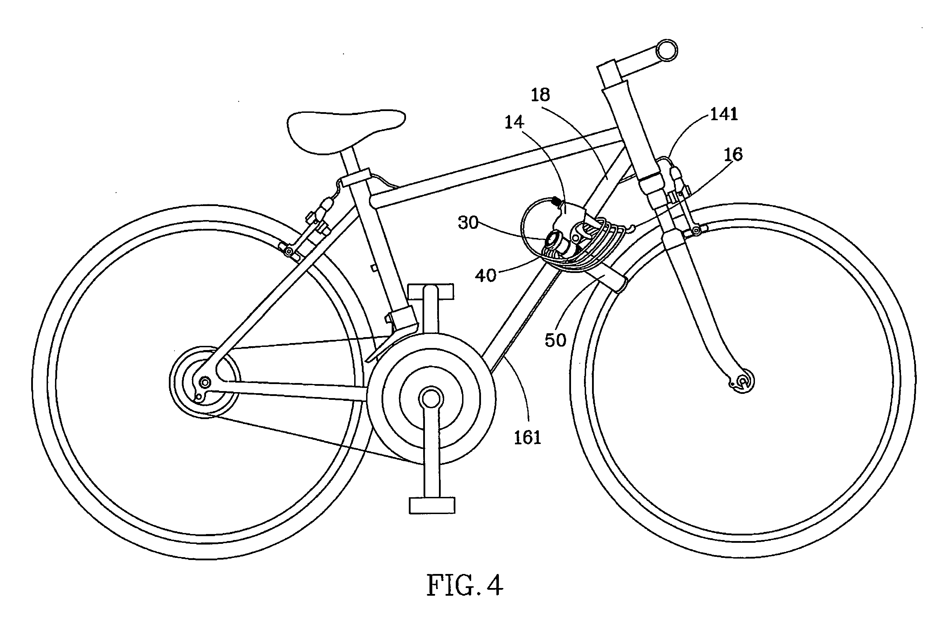

When wishing to detach the handlebar **20** from the bicycle, loosen the screw rods **46** from the clamping rings **40,** and then remove the sleeves **30** with the associating grips **50,** brake levers **14** and shifters **16** from the end pieces **26** of the handlebar **20,** and then unlock the handlebar **20** from the stem **12.** Thus, the handlebar **20** is separated from the surrounding component parts (see FIG. 3). When wishing to install the detachable bicycle handlebar assembly **10** again, press-fit the sleeves **30** onto the end pieces **26** of the handlebar **20** respectively, and then fasten tight the screw rods **46** to affix the clamping rings **40,** the sleeves **30** and the handlebar **20** together. Therefore, the invention facilitates mounting and dismounting of the detachable bicycle handlebar assembly **10.** Based on the aforesaid design, two handlebars **20** of different configurations can be selectively used to show a different visual style. Further, during transportation of the bicycle, as shown in FIG. 4, the sleeves **30** with the grips **50,** the brake levers **14** and the shifters **16** can be removed from the handlebar **20** and secured with the derailleur cable **161** and the brake cable **141** to the down tube **18** of the bicycle, and the handlebar **20** can be removed from the stem **12** of the bicycle, thereby reducing the width of the bicycle to facilitate delivery. Further, the derailleur cable **161** and the brake cable **141** are wound together around the detached sleeves **30** and secured with the detached sleeves **30** to the down tube **18** of the bicycle in place, avoiding hooking by an external object and facilitating delivery.

Further, the outer diameter of the base **22** of the handlebar **20** is substantially similar to conventional dimensions so that the handlebar **20** fits the stem **12** of any of a variety of conventional bicycles. Further, subject to the tapered design of the tapered connection portions **24,** the outer diameter of the two end pieces **26** is relatively smaller than that of the conventional dimensions, however the outer diameter of the sleeves **30** are substantially equal to the handlebar of the conventional dimensions and suitable for the installation of conventional brake levers **14** or shifters **16.**

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A detachable handlebar assembly (10), comprising:
a handlebar (20); and
two grips (50);
**characterized in that** the detachable handlebar assembly (10) comprises:
two sleeves (30) respectively sleeved onto two distal ends (26) of said handlebar (20), each said sleeve (30) having an inner end (32), an outer end (34) opposite to said inner end (32), and a longitudinal crevice (36) longitudinally cut through the peripheral wall of said inner end (32); and
two clamping rings (40) respectively fastened to the inner ends (32) of said sleeves (30) to secure said sleeves (30) to the two distal ends (26) of said handlebar (20);
wherein two grips (50) respectively are mounted on said sleeves (30) at an outer side relative to said clamping rings (40).

2. The detachable handlebar assembly (10) as claimed in claim 1, **characterized in that** said handlebar (20) comprises a base (22), two end pieces (26), and two tapered connection portions (24) respectively connected between two opposite ends of said base (22) and said two end pieces (26), each said tapered connection portion (24) having a diameter gradually reducing in direction away from said base (22) toward the associating end piece (26).

3. The detachable handlebar assembly (10) as claimed in claim 1, **characterized in that** said clamping rings (40) are C-shaped clamping members, each said clamping ring (40) having two free ends (42,44) fastened together with a screw rod (46).

4. The detachable handlebar assembly (10) as claimed in claim 3, **characterized in that** each said sleeve (30) comprises a protruding block (38) inserted into the gap (43) between the two free ends (42,44) of the associating clamping ring (40).

5. The detachable handlebar assembly (10) as claimed in claim 1, **characterized in that** said handlebar (20) has a base (22) on the middle thereof, said base (22) having a toothed surface (221).
